# EUROPÄISCHE PATENTSCHRIFT

(11) **EP 2 058 154 B1**
(45) Veröffentlichungstag und Bekanntmachung des Hinweises auf die Patenterteilung: **18.04.2012**
(21) Anmeldenummer: 08018531.7
(22) Anmeldetag: 23.10.2008
(51) Int. Cl.: B60G 9/02, B60G 11/27, B60G 21/055, B60B 23/12, B60B 35/10, B62D 49/06

(54) **Fahrgestell für Spezialfahrzeuge**
Frame for special vehicles
Châssis pour véhicules spéciaux

(30) Priorität: 09.11.2007 DE 102007053906
(43) Veröffentlichungstag der Anmeldung: 13.05.2009
(73) Patentinhaber: Herbert Dammann GmbH, 21614 Buxtehude-Hedendorf (DE)
(72) Erfinder: Dammann, Herbert, 21614 Buxtehude-Hedendorf (DE)
(74) Vertreter: Hansen, Jochen

(56) Entgegenhaltungen:
- EP-A- 1 685 988
- DE-A1- 10 320 291
- DE-A1- 19 639 777
- DE-T2- 60 304 873
- GB-A- 2 402 658
- US-A- 3 236 324
- US-A- 3 899 037
- US-A- 4 395 191
- US-A- 5 039 129
- US-A- 5 282 644
- US-A1- 2006 283 653
- US-B1- 6 311 795
- US-B1- 6 454 294

## Beschreibung

Die Erfindung betrifft ein Fahrgestell für Spezialfahrzeuge mit einer Vorderachse und einer weiteren Fahrzeugachse und höhenverstellbaren Radaufhängungen, die vom Fahrer fernsteuerbare Vertikalstelleinheiten zur Veränderung der Bodenfreiheit und mit vom Fahrer fernsteuerbaren Horizontalstelleinheiten zur Veränderung der Spurweite während der Fahrt versehen sind, wobei als Stellmotoren für die Stelleinheiten Hydraulikzylinder vorgesehen sind.

Aus dem Stand der Technik sind unterschiedliche Verfahren und Anordnungen bekannt, um die Spurweite und Höhe von Spezialfahrzeugen zu verstellen.

Ein in der Höhe verstellbares Fahrgestell ist aus der DE 103 20 291 A1 bekannt. Das dort offenbarte hydraulische Fahrwerkssystem besteht aus einer zentralen Hydraulikeinheit und vertikal angeordneten Hydraulikzylindern zur Höhenverstellung der Radaufhängungen, Mit Hilfe dieses hydraulischen Fahrwerkssystems kann die Last des Fahrzeugs beim Fahren am Hang oder in Kurven immer zu gleichen Teilen auf die Räder einer Fahrzeugseite verteilt werden. Des Weiteren können Bodenunebenheiten, insbesondere am Hang während der Fahrt ausgeglichen und die Bodenfreiheit verändert werden.

Weiter beschreibt die US 6,311,795 B1 eine Anordnung zum Heben und Senken eines Fahrgestells für landwirtschaftliche Fahrzeuge, bei der das Fahrzeug derart ausgestaltet ist, dass die Spurweite als auch die Bodenfreiheit veränderbar ist, Die Veränderung der Spurweite kann hierbei unter anderem über Stelleinheiten erfolgen, an denen die Räder des Fahrzeugs befestigt sind. Die Verstellung in der Höhe kann über Hydraulikstelleinheiten erfolgen, deren Hubbewegung zu einer Verstellung von Radaufnahmen führt, wodurch die Bodenfreiheit des Fahrzeugs variiert wird. Die Verstellung der Spurweite erfolgt alternativ Ober Schwenkausleger, an denen die Radaufnahmen angeordnet sind.

Aus der US 6,454,205 B1 ist ein landwirtschaftliches Fahrzeug bekannt, welches in der Bodenfreiheit und in der Spurweite variabel einstellbar ist. Die Veränderung der Bodenfreiheit erfolgt hierbei über indirekt wirkende Hydraulikzylinder, die auf ein Verstellgestell verstellend einwirken, Die Verstellung der Spurweite erfolgt über ein ineinander verschiebbares Verstellsystem, welches ebenfalls über hydraulische Stelleinheiten veränderbar ist.

Die US 3,236,324 A beschreibt eine Anordnung für ein landwirtschaftliches Fahrzeug, das in dessen Spurweite und Bodenfreiheit veränderbar ist. Das Fahrzeug weist dabei ein Fahrgestell mit einer Plattform auf, an dem einzeln ansteuerbare Radaufhängungen angeordnet sind. Die Veränderung der Spurweite erfolgt ein- oder beidseitig mit Hilfe von Hydraulikzylindern, welche durch Druckbeaufschlagung ausgefahren werden können und so eine Spurverbreiterung während der Vorwärts- oder Rückwärtsbewegung ausführen. Die Verstellung der Bodenfreiheit erfolgt ebenfalls mit Hilfe von druckbeaufschlagbaren Hydraulikzylindern, die sich dann in deren Länge verändern.

Aufgabe der Erfindung ist es, ein Fahrgestell für Spezialfahrzeuge, insbesondere für landwirtschaftliche Zwecke anzugeben, mit dem eine möglichst schonende Behandlung landwirtschaftlicher Kulturen und auch das Befahren öffentlicher Wege und Straßen möglich ist, ohne dass zeitaufwandige Umbauten vorgenommen werden mussten. Weiter ist es Aufgabe der Erindung, eine Anordnung aufzuzeigen, die es ermöglicht, dass ein Fahrzeug mit einem formastabilen Rahmen und gleichzeitig mit einer Spurweitenverstellung ausgestattet werden kann.

Gelöst wird diese Aufgabe mit einer Anordnung nach Anspruch 1, nämlich dadurch, dass das Fahrgestell einen Rahmen aufweist, wobei an dem Rahmen eine pendelgelagerte Vorderachse vorgesehen ist, die über ein mittig angeordnetes Gelenklager mit dem Rahmen verbunden und mit einem Querstabilisator versehen ist und die weitere Fahrzeugachse an dem Rahmen angeordnet ist, wobei die Vorderachse und die weitere Fahrzeugachse jeweils die Horizontalstelleinheiten und die Vertikalstelleinheiten aufweisen und weiter aus ineinander verschiebbaren Führungsprofilen zur Aufnahme der Gewichtskräfte ausgebildet sind, wobei die Führungsprofile im wesentlichen Kräfte quer zur Verstellrichtung aufnehmen und die Horizontalstelleinheiten im wesentlichen mit Kräften in Verstellrichtung belastet werden.

Weiter sind die Radaufhangungen mit vom Fahrer fernsteuerbaren Horizontalstelleinheiten zur Veränderung der Spurweite während der Fahrt versehen sind. Diese Maßnahme ermöglicht die Anpassung der Spurweite an die landwirtschaftliche Kultur, bei der Kulturpflanzen wie Mais, Raps oder Sonnenblumen in unterschiedlichen Reihenabstanden angebaut werden. Außerdem hat die Verbreiterung der Spurweite den Vorteil, dass auch eine größere Bodenfreiheit eingestellt werden kann, ohne dass die Standsicherheit des Fahrzeugs gefährlich verringert würde. Dies ermöglicht den Einsatz eines erfindungsgemäß ausgestatteten Fahrzeugs auch bei sehr hochwachsenden Kulturen, wie Mais und Sonnenblumen, da die Bodenfreiheit groß genug gewählt werden kann.

Die ferngesteuerte Verstellung der Spurbreite und der Bodenfreiheit aus der Fahrerkabine bedeutet für den Anwender eine enorme Arbeitserleichterung und gleichzeitig wird dadurch die Arbeitssicherheit erhöht. Es müssen keine gefährlichen Montagearbeiten vor Ort ausgeführt werden, um die Höhe oder Breite des Fahrwerks zu verändern. Auch die Verwendung von Pressen, Schrauben und Drehmomentschlüsseln ist nicht erforderlich. Die Unfallgefahr und damit verbundene Ausfälle werden vermindert, auch braucht der Fahrer keine Kenntnisse für die Tätigkeit als Umbaumonteur. Vom betriebswirtschaftlichen Standpunkt aus gesehen, können die Arbeiten sehr viel wirtschaftlicher durch weniger qualifizierte Kräfte und in kürzerer Zeit durchgeführt werden.

Nach getaner Arbeit können sowohl Bodenfreiheit als auch Spurweite auf einfache Weise wieder reduziert werden, um öffentliche Wege und Straßen befahren zu dürfen. Gesetzlich ist die Breite eines Fahrzeuges auf 2,5 m und die Höhe auf 4,0 m begrenzt. Diese Werte können ohne weiteres eingehalten werden. Zur Veränderung der Spurweite und der Bodenfreiheit braucht der Fahrer nicht einmal auszusteigen. Beim nächsten Einsatz können Spurweite und Bodenfreiheit wieder an ganz andere Bedingungen angepasst werden, ohne dass es besonderer Vorbereitungen dafür bedürfte.

In einer bevorzugten Ausführungsform sind die Stellmotoren für die Stelleinheiten als Hydraulikzylinder ausgestaltet. Hydraulische Aggregate sind zuverlässig, wenig störanfällig, weit verbreitet und kostengünstig zu beschaffen. In der Regel ist ein hier in Frage kommendes Spezialfahrzeug ohnehin mit einer Hydraulikanlage ausgestattet, so dass nur geringe Zusatzkosten für die Realisierung der Erfindung entstehen.

Zur Abstützung des Fahrzeuggewichts sind ineinander verschiebbare Führungsprofile aus Stahl vorgesehen, die quer zur Verschieberichtung durch das Fahrzeuggewicht belastet werden und somit die Stelleinheiten entlasten, welche nur mit Kräften in Verstellrichtung belastet werden.

Wenn die Spurweite in Bereich zwischen 1,8 m und 3,0 m einstellbar ist, können im unteren Teil des Verstellbereichs die gesetzlichen Bestimmungen für Fahrten auf öffentlichen Wegen und Straßen eingehalten werden und andererseits steht ein ausreichender Spielraum für die Anpassung der Spurweite an die Pflanzabstände der landwirtschaftlichen Kulturen zur Verfügung. Auf diese Weise lässt sich immer eine Spurweite finden, bei der alle Räder zwischen zwei Pflanzreihen rollen und die Pflanzen nicht beschädigen.

Wenn eine Vorrichtung zur Anzeige der aktuellen Spurweite am Fahrerstand vorgesehen ist, vorzugsweise in Form eines Computerterminals, kann der Fahrer die Spurweite ganz bequem auf einen bekannten Wert einstellen, beispielsweise für die Befahrung von öffentlichen Straßen oder für die Befahrung eines Maisfeldes, von dem der Abstand der Pflanzreihen bekannt ist. Ein Ausprobieren oder manuelles Abstimmen der Spurweite ist nicht erforderlich.

In Ausgestaltung der Erfindung ist ein Bedienschalter zur Spurweitenverstellung am Fahrerstand vorgesehen, vorzugsweise an einen Computerterminal. Durch die Anordnung des Bedienschalters kann der Fahrer ohne den Fahrerstand zu verlassen die Spurweitenverstellung vornehmen, während er das Fahrzeug führt, denn ohne eine geringfügige Vorwärtsgeschwindigkeit kann die Spurverstellung nicht vorgenommen werden. Der Bedienschalter wird auf einfache Weise am Computerterminal angeordnet sein, welches auch die Spurweitenanzeige umfasst.

Wenn die einzustellende Spurweite vorwählbar ist, insbesondere durch Auswahl einer Spurweite aus mehreren fest vorgegebenen Werten, braucht die Bedienperson nicht ständig auf die sich verändernden Werte achten, um im richtigen Moment die Spurverstellung zu unterbrechen. Vielmehr kann durch die genannte Maßnahme der gewünschte Wert ausgewählt und anschließend der Bedienschalter betätigt werden, bis sich die gewünschte Spurweite eingestellt hat.

Da eine Verstellung der Spurweite bei Stillstand der Räder nicht möglich ist und eventuell zu Beschädigungen führen kann, schlägt eine Weiterbildung der Erfindung vor, dass eine Sperre vorgesehen ist, die eine Veränderung der Spurweite bei Stillstand der Räder verhindert, vorzugsweise in Form einer softwaremäßigen oder hardwaremäßigen elektronischen Sperre in einer Steuervorrichtung zur Steuerung der Horizontalstelleinheiten. Eine solche Sperre lässt sich besonders einfach realisieren, wenn die Steuervorrichtung einen programmierbaren Mikroprozessor enthält. Die Steuervorrichtung muss dann nur noch mit einem oder mehreren Drehsensoren zur Erfassung der Drehbewegung der Räder verbunden sein. Solche Drehsensoren sind in der Regel ohnehin zur Erfassung der Fahrzeuggeschwindigkeit vorhanden und müssen daher nicht gesondert eingebaut werden. Dann beschränkt sich die Realisierung der elektronischen Sperre darin, ein kleines Programm in die Steuerungssoftware einzufügen.

In Ausgestaltung der Erfindung sind die Radaufhängungen mit einer mechanischen Arretierung für die Spurweite versehen, vorzugsweise in Form einer Exzenter-Arretierung. Durch die mechanische Arretierung wird die eingestellte Spurweite konstant gehalten, ohne dass die Horizontalstelleinheiten belastet werden oder aktiviert werden müssten. Eine unabsichtliche Verstellung der Spurweite wird somit verhindert.

In einer bevorzugten Ausführungsform ist die mechanische Arretierung hydraulisch betätigbar und vom Fahrer fernsteuerbar. Zum arretieren oder Lösen der Arretierung braucht der Fahrer somit den Fahrerstand nicht zu verlassen. Eine hydraulische Betätigung hat wiederum die oben bereits genannten Vorteile.

In Ausgestaltung der Erfindung sind die Räder einer angetriebenen Achse jeweils mit einem hydraulischen Radnabenmotor versehen, wobei vorzugsweise zwei angetriebene Achsen mit vier Rädern vorgesehen sind. Ein hydraulischer Motor ist bei ohnehin vorhandener Hydraulikanlage mit geringem Aufwand realisierbar. Durch die Ausgestaltungsform als Radnabenmotor entfallen Antriebswellen und Ausgleichsgetriebe. In seiner einfachsten Ausführungsform besitzt das Fahrgestell vier Räder, die zur sicheren Fortbewegung im schwierigen Gelände vorzugsweise alle angetrieben sind.

In Ausgestaltung der Vertikalstelleinheiten ist vorgesehen, dass diese in Form von jeweils zwei in Fahrtrichtung hintereinander angeordneten vertikal ausgerichteten Hydraulikzylindern ausgeführt sind. Auf diese Weise kann auf weitere Radaufhängungsmittel, insbesondere Lenker verzichtet werden. Lediglich die gelenkten Räder müssen schwenkbar befestigt sein.

In Ausgestaltung der Erfindung ist vorgesehen, dass eine Bodenfreiheit zwischen 1,15 m und 2,0 m einstellbar ist. Die höchste Bodenfreiheit von 2,0 m reicht aus, um damit Mais oder Sonnenblumenkulturen befahren zu können, ohne die Pflanzen zu beschädigen. Bei einer Bodenfreiheit von 1,15 m ist ein sicheres Fahren auf öffentlichen Straßen möglich, ohne dass die gesetzliche Maximalhöhe für das Fahrzeug überschritten wird und ohne dass die Gefahr des Umkippens besteht.

Eine Anzeigevorrichtung zur Anzeige der aktuellen Bodenfreiheit am Fahrerstand, vorzugsweise in Form eines Computerterminals, ein Bedienschalter zur Höhenverstellung am Fahrerstand, vorzugsweise am Computerterminal, und die Vorwählbarkeit der Bodenfreiheit, insbesondere durch Auswahl aus mehreren vorgegeben Werten hat die weiter oben bereits im Zusammenhang mit der Spurweitenverstellung beschriebenen Vorteile.

Zur Erhöhung der Sicherheit und insbesondere zum Verhindern des Kippens des Fahrzeugs ist vorgesehen, dass eine Antriebssteuervorrichtung einen Geschwindigkeitsbegrenzer aufweist, der bei einer größeren Bodenfreiheit als ein vorgegebener Grenzwert die Fahrgeschwindigkeit des Fahrgestells auf einen vorgegebenen Wert begrenzt, vorzugsweise dass bei einer größeren Bodenfreiheit als 1,3 m die Geschwindigkeit elektronisch auf maximal 15 km/h begrenzt wird.

In Ausgestaltung der Erfindung ist eine Luftfederung vorgesehen, die einen Lastregler aufweist, der die Bodenfreiheit bei variablem Ladungsgewicht konstant hält. Dadurch wird sichergestellt, dass die Bodenfreiheit immer konstant den vorgewählten Wert aufweist, auch wenn das Fahrzeug Last aufgenommen hat, beispielsweise Spritzmittel. Genauso bleibt die Bodenfreiheit konstant, wenn das Fahrzeug beispielsweise beim Betrieb auf dem Acker das Spritzmittel verspritzt und dabei Ladungsgewicht verliert.

In Ausgestaltung einer Vorderachse mit lenkbaren Rädern ist eine pendelgelagerte Vorderachse vorgesehen, die über ein mittig angeordnetes Gelenklager mit dem Fahrgestell verbunden und mit einem Querstabilisator versehen ist. Um die Funktion der Vorderachse auch bei Verstellung der Spurweite zu gewährleisten, ist die Vorderachse zur Lenkung der Vorderräder mit einer Spurstange versehen, die einen Hydraulikzylinder aufweist, der zur Längsverstellung der Spurstange synchron zur Verstellung der Spurweite der Vorderräder dient.

Das erfindungsgemäße Fahrgestell wird noch verbessert, wenn die Räder mit Pflanzenabweisern versehen sind, die aus einer die Vorderseite der Räder umgebenden Verkleidung aus Blech oder Kunststoff bestehen, die nach vorne spitz zuläuft. Diese Verkleidung sorgt dafür, dass eventuell in dem Bereich der Räder hineinragende Pflanzenteile beim Vorbeifahren zur Seite geschoben und nicht überfahren werden. Der Pflanzenbestand wird dadurch geschont.

Ein Ausführungsbeispiel der Erfindung wird nachfolgend an Hand der Zeichnungen näher erläutert. Die Figuren zeigen im Einzelnen:
Figur 1: Eine perspektivische Darstellung eines erfindungsgemäßen Fahrgestells im Zustand mit minimaler Spurweite und Bodenfreiheit;
Figur 2: Das selbe Fahrgestell mit maximaler Spurweite und Bodenfreiheit;
Figur 3: Eine Teilansicht einer hinteren Radaufhängung des selben Fahrzeugs im eingefahrenen Zustand;
Figur 4: Wie Figur 3, jedoch im ausgefahrenen Zustand,
Figur 5: Eine perspektivische Ansicht des Vorderachsbereichs eines erfindungsgemäßen Fahrgestells im eingefahrenen Zustand;
Figur 6: Eine geschnittenen Darstellung des Vorderachsbereichs eines erfindungsgemäßen Fahrgestells im eingefahrenen Zustand mit minimaler Spurweite;

Figur 7: Wie Figur 6, jedoch im ausgefahrenen Zustand mit maximaler Spurweite

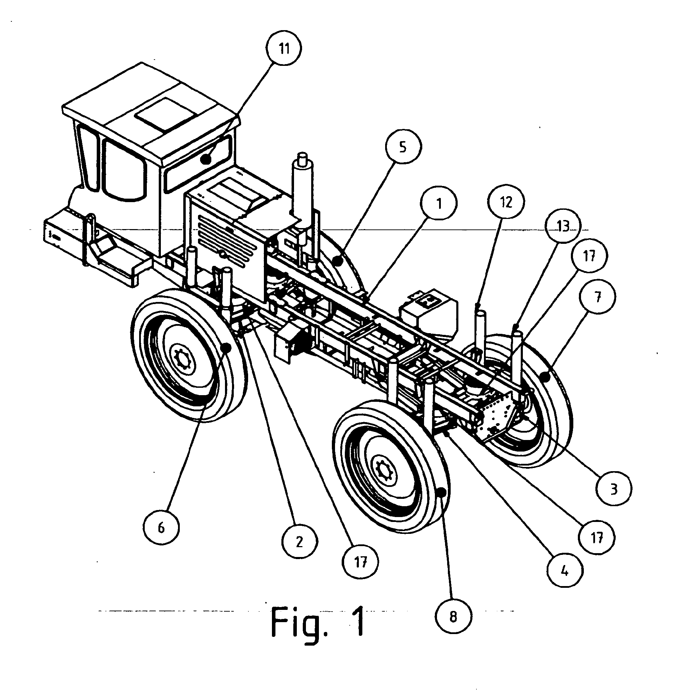

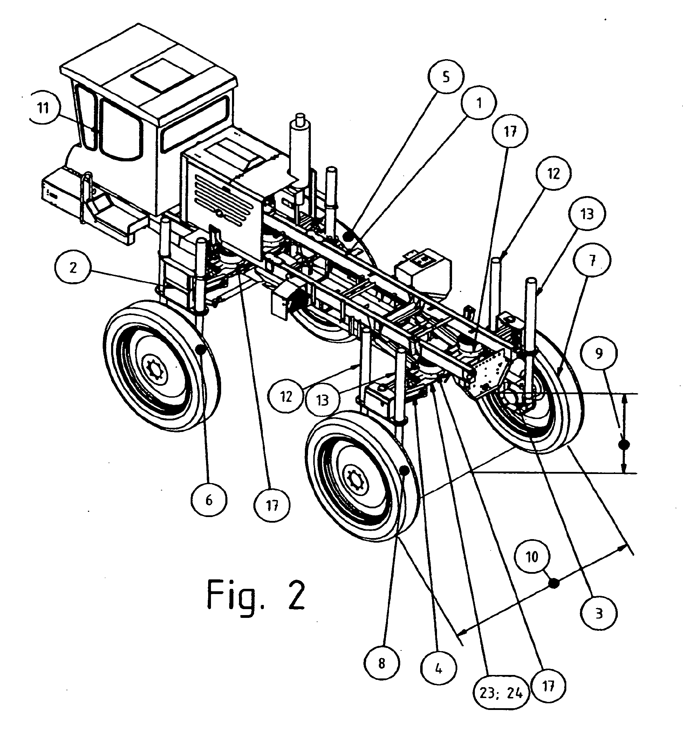

In den Figuren 1 und 2 erkennt man ein Fahrgestell für Spezialfahrzeuge, insbesondere zur Verwendung in der Landwirtschaft, beispielsweise als Spritzfahrzeug zum Aufbringen von Spritzmitteln auf landwirtschaftliche Kulturen. Da der jeweilige Aufbau auf das Fahrgestell, beispielsweise ein Tank und ausfahrbare Arme zum Ausbringen der Spritzmittel nicht direkt mit der vorliegenden Erfindung zu tun haben, sind sie in den Darstellungen weggelassen worden.

Das dargestellte Fahrgestell hat vier Radaufhängungen 1, 2, 3, 4, mit denen sowohl die Höhe des Fahrgestells und damit seine Bodenfreiheit 9 als auch die Spurweite 10 der Räder 5, 6, 7, 8 einstellbar ist. Mit Hilfe der erfindungsgemäßen Ausgestaltung lässt sich die Spurweite 10 zwischen 1,8 m (siehe Figur 1) und 3,0 m (siehe Figur 2) einstellen. Die Einstellung erfolgt mittels elektrohydraulischer Mittel, wobei am Fahrerstand 11 eine nicht gezeigte Anzeigevorrichtung zur Anzeige der aktuellen Spurweite vorgesehen ist.

Die Anzeige ist in Form eines Computerterminals ausgestaltet, welches darüber hinaus mit einem Bedienschalter zur ferngesteuerten Spurweitenverstellung durch den Fahrer versehen ist. Das Computerterminal ist mit einem Steuergerät verbunden, vorzugsweise einem Computer, über den die elektrohydraulischen Verstelleinheiten steuerbar sind. In dem Computer sind mehrere Werte für bekannte Spurweiten abgespeichert, so dass der Fahrer über das Computerterminal lediglich eine passende Spurweite auswählen muss. Darüber hinaus kann der Fahrer auch einen beliebigen Wert für die Spurweite in das Computerterminal eingeben. Selbstverständlich ist die Spurweitenverstellung auch mittels des Bedienschalters direkt vornehmbar, wobei der Fahrer oder eine Hilfsperson die Räder beobachtet, um festzustellen, wann die gewünschte Spurweite erreicht ist.

Da die Spurweitenverstellung nur während der Fahrt möglich ist sorgt eine elektronisch realisierte Sperre in der Steuervorrichtung dafür, dass die Verstellung der Spurweite 10 bei Stillstand der Räder 5, 6, 7, 8 blockiert wird.

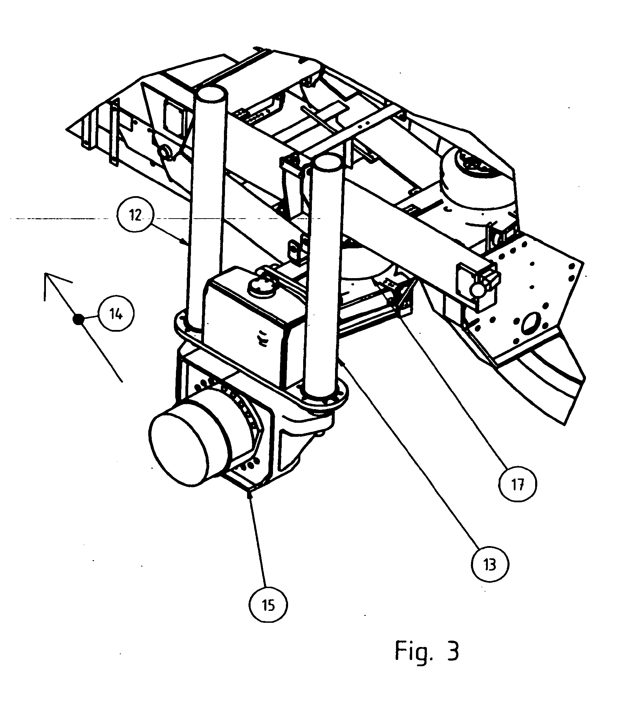

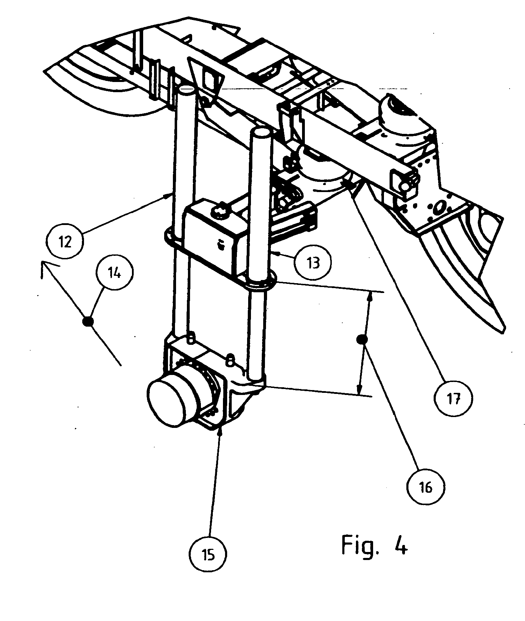

Wie man am besten in den Figuren 3 und 4 erkennt, ist jede Radaufhängung 1, 2, 3, 4 mit zwei Vertikalstelleinheiten 12, 13 versehen, die in Fahrtrichtung 14 hintereinander angeordnet sind und aus vertikal angeordneten Hydraulikzylindern 12, 13 bestehen. An der Unterseite der Vertikalstelleinheiten 12, 13 ist jeweils ein hydraulischer Radnabenmotor befestigt, der das jeweilige Rad 5, 6, 7, 8 trägt. Im vorliegenden Ausführungsbeispiel sind vier Radnabenmotoren 15 an jedem der vier Räder 5, 6, 7, 8 vorgesehen, so dass alle Räder an beiden Achsen angetrieben sind.

Zur Veränderung der Bodenfreiheit 9 werden die Hydraulikzylinder der Vertikalstelleinheiten 12, 13 an allen vier Radaufhängungen 1, 2, 3, 4 ausgefahren, so dass sich das Fahrgestell insgesamt nach oben bewegt. Dabei steht ein maximaler Verstellweg 16 (siehe Figur 4) von 0,85 m zur Verfügung. Figur 3 zeigt den Zustand mit vollständig eingefahrenen Vertikalstelleinheiten 12, 13, bei dem eine Bodenfreiheit von 1,15 m erreicht wird. Figur 4 zeigt den Zustand mit vollständig ausgefahrenen Vertikalstelleinheiten 12, 13, bei dem eine Bodenfreiheit von 2,0 m erreicht wird.

Wie auch bei der Horizontalverstellung ist am Fahrerstand 11 eine Anzeigevorrichtung zur Anzeige der Bodenfreiheit 9 vorgesehen, nämlich in dem oben erwähnten Computerterminal, welches in den Zeichnungen nicht dargestellt ist. Ebenfalls ist an dem Computerterminal ein Bedienschalter zur ferngesteuerten Höhenverstellung durch den Fahrer vom Fahrerstand 11 aus vorgesehen. Dieser kann zwischen vorgegebenen, im Computer gespeicherten Werten für die Bodenfreiheit auswählen, oder einen Wert für die Bodenfreiheit 9 direkt eintippen oder den Bedienschalter solange bedienen, bis die gewünschte Bodenfreiheit 9 erreicht ist.

Des Weiteren ist in dem genannten Bordcomputer eine Antriebssteuervorrichtung realisiert, die einen Geschwindigkeitsbegrenzer aufweist. Im Falle, dass die Bodenfreiheit 9 einen größeren Wert als einen vorgegebenen Grenzwert aufweist, sorgt der Geschwindigkeitsbegrenzer dafür, dass die Fahrgeschwindigkeit des Fahrgestells auf einen ebenfalls vorgegebenen Wert begrenzt wird. Im vorliegenden Fall wird die Fahrgeschwindigkeit elektronisch auf maximal 15 km/h begrenzt, sobald die Bodenfreiheit 9 größer als 1,3 m ist.

Wie man am besten in den Figuren 1 bis 4 erkennt, ist das Fahrgestell mit einer Luftfederung versehen, die aus vier Luftfedereinheiten 17 und einer nicht gezeigten pneumatischen Versorgungseinheit besteht. Die Luftfedereinheiten 17 sind außerdem mit einer Steuervorrichtung verbunden, die im erwähnten Bordcomputer untergebracht ist. Außerdem sind in den Figuren nicht gezeigte Lastregler vorgesehen, die Sensoren für die Bodenfreiheit 9 aufweisen und die Luftfedereinheiten 17 jeweils so ansteuern, dass bei sich änderndem Ladungsgewicht eine konstante Bodenfreiheit 9 hergestellt wird.

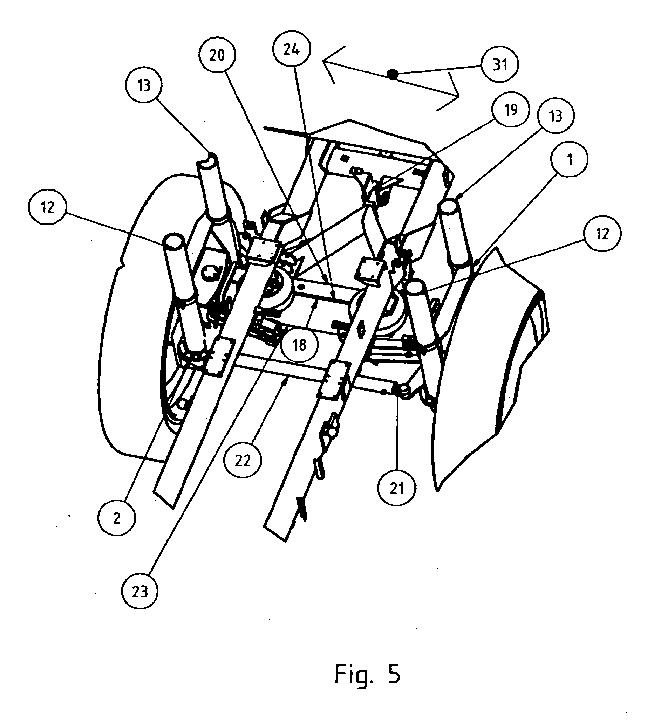

Wie man am besten in Figur 5 erkennt, ist eine pendelgelagerte Vorderachse 18 vorgesehen, die über ein mittig angeordnetes Gelenklager 19 mit dem Fahrgestell verbunden ist und einen Querstabilistator 20 aufweist.

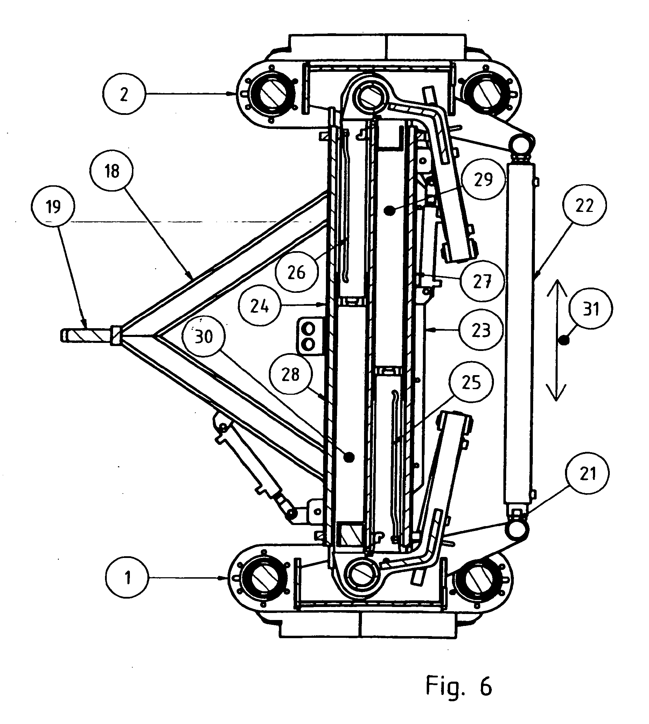

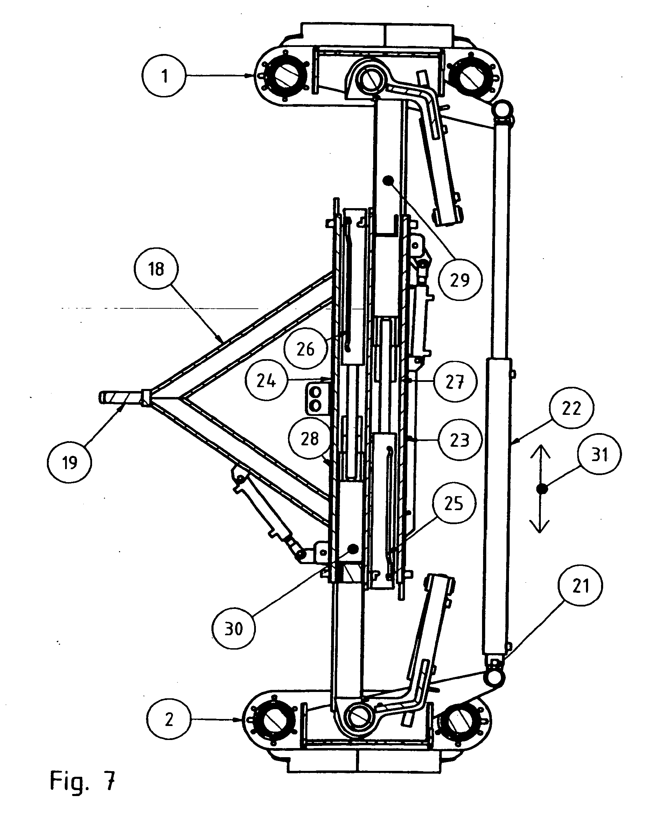

Für die Horizontalverstellung in Verstellrichtung 31 weist jede Achse zwei Horizontalstelleinheiten 23, 24 auf, die beispielhaft für die Vorderachse 18 in den Figuren 6 und 7 im Detail dargestellt sind. Jede Horizontalstelleinheit 23, 24 besteht aus einem Hydraulikzylinder 25, 26, der im Inneren eines äußeren Führungsprofils 27, 28 angeordnet ist. Die äußeren Führungsprofile 27, 28 sind fest mit der Vorderachse verbunden. Im Inneren der äußeren Führungsprofile 27, 28 sind Innere Führungsprofile 29, 30 verschiebbar angeordnet. Die inneren Führungsprofile 29, 30 sind jeweils mit den Vertikalstelleinheiten 12, 13 fest verbunden. Die Hydraulikzylinder 25, 26 stützen sich einerseits am jeweiligen äußeren Führungsprofil 27, 28 ab und sind mit Ihren beweglichen Enden an den in Verstellrichtung 31 verschiebbaren inneren Führungsprofilen 29, 30 befestigt. Bei Betätigung der Horizontalstelleinheit 23, 24 werden die Hydraulikzylinder 25, 26 mit Hydraulikflüssigkeit beaufschlagt, so dass die Inneren Führungsprofile 29, 30 in den äußeren Führungsprofilen 27, 28 in Verstellrichtung 31 verschoben werden. Dabei werden die mit den inneren Führungsprofilen 29, 30 fest verbundenen Vertikalstelleinheiten 12, 13 und die mit den Vertikalstelleinheiten 12, 13 verbundenden Räder 5, 6 ebenfalls in Verstellrichtung 31 verschoben und zwar je nach Beaufschlagung der Hydraulikzylinder 25, 26 entweder nach außen oder nach innen. Dabei werden die Hydraulikzylinder 25, 26 lediglich mit einer Verstellkraft in Verstellrichtung 21 beaufschlagt. Die zur Abstützung des Fahrgestells über die Räder in vertikaler Richtung wirkenden Kräfte, die aus den Gewichtskräften an den Radaufhängungen 1, 2, 3, 4 resultieren, wirken quer zur Verstellrichtung 31 und belasten daher nur die Führungsprofile 27, 28, 29, 30.

Eine für die Lenkung der Vorderräder 5, 6 vorgesehene Spurstange 22 ist im Wesentlichen in Form eines Hydraulikzylinders 22 ausgestaltet, um bei einer Verstellung der Spurweite 10 in Verstellrichtung 31 die Länge der Spurstange 21 an die veränderte Spurweite 10 anzupassen. Die Verstellung der Länge der Spurstange 21 erfolgt synchron zur Verstellung der Spurweite 10 in Verstellrichtung 31.

Die Verstellung der Hinterachse erfolgt ganz analog zur Verstellung der Vorderachse 18, wobei die Horizontalstelleinheit 23, 24 entsprechend ausgebildet sind. Lediglich die Spurstange 21 ist bei der Hinterachse nicht vorgesehen.

### BEZUGSZEICHENLISTE

- 1: Radaufhängung
- 2: Radaufhängung
- 3: Radaufhängung
- 4: Radaufhängung
- 5: Rad
- 6: Rad
- 7: Rad
- 8: Rad
- 9: Bodenfreiheit
- 10: Spurweite
- 11: Faherstand
- 12: Vertikalstelleinheit
- 13: Vertikalstelleinheit
- 14: Fahrtrichtung
- 15: Radnabenmotor
- 16: Verstellweg
- 17: Luftfedereinheit
- 18: Vorderachse
- 19: Gelenklager
- 20: Querstabilisator
- 21: Spurstange
- 22: Hydraulikzylinder
- 23: Horizontalstelleinheit
- 24: Horizontalstelleinheit
- 25: Hydraulikzylinder
- 26: Hydraulikzylinder
- 27: äußeres Führungsprofil
- 28: äußeres Führungsprofil
- 29: inneres Führungsprofil
- 30: inneres Führungsprofil
- 31: Verstellrichtung

## Patentansprüche

1. Fahrgestell für Spezialfahrzeuge mit einer Vorderachse und einer weiteren Fahrzeugachse und höhenverstellbaren Radaufhängungen (1, 2, 3 ,4), die vom Fahrer fernsteuerbare Vertikaistelleinheiten (12, 13) zur Veränderung der Bodenfreiheit (9) und mit vom Fahrer fernsteuerbaren Horizontalstelleinheiten (23, 24) zur Veränderung der Spurweite (10) während der Fahrt versehen sind, wobei als Stellmotoren für die Stelleinheiten Hydraulikzylinder (12, 13, 25, 26) vorgesehen sind, **dadurch gekennzeichnet, dass** das Fahrgestell einen Rahmen aufweist, wobei an dem Rahmen eine pendelgelagerte Vorderachse (18) vorgesehen ist, die über ein mittig angeordnetes Gelenklager (19) mit dem Rahmen verbunden und mit einem Querstabilisator (20) versehen ist und die weitere Fahrzeugachse an dem Rahmen angeordnet ist, wobei die Vorderachse und die weitere Fahrzeugachse jeweils die Horizontalstelleinheiten (23, 24) und die Vertikalstelleinheiten (12, 13) aufweisen und weiter aus ineinander verschiebbaren Führungsprofilen (27, 28, 29, 30) zur Aufnahme der Gewichtskräfte ausgebildet sind, wobei die Führungsprofile (27, 28, 29, 30) im wesentlichen Kräfte quer zur Verstellrichtung (31) aufnehmen und die Horizontalstelleinheiten (23, 24) im wesentlichen mit Kräften in Verstellrichtung (31) belastet werden.

2. Fahrgestell für Spezialfahrzeuge nach Anspruch 1, **dadurch gekennzeichnet, dass** eine Luftfederung (17) zwischen der Vorderachse und der Hinterachse und dem Rahmen vorgesehen ist, die einen Lastregler aufweist, der die Bodenfreiheit (9) bei variablem Ladungsgewicht konstant hält.

3. Fahrgestell für Spezialfahrzeuge nach Anspruch 1 oder 2, **dadurch gekennzeichnet, dass** die Vertikalstelleinheiten (12, 13) aus jeweils zwei in Fahrtrichtung (14) hintereinander angeordneten und vertikal ausgerichteten Hydraulikzylindern ausgeführt sind.

4. Fahrgestell für Spezialfahrzeuge nach Anspruch 1, 2 oder 3, **dadurch gekennzeichnet, dass** die Räder (5, 6, 7, 8) einer angetriebenen Achse jeweils mit einem hydraulischen Radnabenmotor (15) versehen sind und dass vorzugsweise zwei angetriebene Achsen mit vier Rädern (5, 6, 7, 8) vorgesehen sind.

5. Fahrgestell für Spezialfahrzeuge nach einem der Ansprüche 1 bis 4, **dadurch gekennzeichnet, dass** die Vorderachse (18) zur Lenkung der Vorderräder (5, 6) mit einer Spurstange (21) versehen ist, die einen Hydraulikzylinder (22) aufweist, der zur Längsverstellung der Spurstange (21) synchron zur Verstellung der Spurweite (10) der Vorderräder (5, 6) dient.

6. Fahrgestell für Spezialfahrzeuge nach einem der vorangehenden Ansprüche, **dadurch gekennzeichnet, dass** die Radaufhängungen (1, 2, 3 ,4) mit einer mechanischen Arretierung für die Spurweite (10) versehen sind, vorzugsweise in Form einer Exzenter-Arretierung.

7. Fahrgestell für Spezialfahrzeuge nach einem der vorangehenden Ansprüche, **dadurch gekennzeichnet, dass** eine Sperre vorgesehen ist, die eine Veränderung der Spurweite (10) bei Stillstand der Räder (5,6,7,8) verhindert, vorzugsweise in Form einer softwaremäßigen oder hardwaremäßigen elektronischen Sperre in einer Steuervorrichtung zur Steuerung der Horinzontalstelleinheiten (23, 24).

8. Fahrgestell für Spezialfahrzeuge nach einem der vorangehenden Ansprüche, **dadurch gekennzeichnet, dass** eine Antriebssteuervorrichtung einen Geschwindigkeitsbegrenzer aufweist, der bei einer größeren Bodenfreiheit (9) als ein vorgegebener Grenzwert die Fahrgeschwindigkeit des Fahrgestells auf einen vorgegebenen Wert begrenzt, vorzugsweise dass bei einer größeren Bodenfreiheit (9) als 1,3 m die Fahrgeschwindigkeit elektronisch auf maximal 15 km/h begrenzt wird.

9. Fahrgestell für Spezialfahrzeuge nach einem der vorangehenden Ansprüche, **dadurch gekennzeichnet, dass** die Räder (5, 6, 7, 8) mit Pflanzenabweisem versehen sind, die aus einer die Vorderseite der Räder (5, 6, 7, 8) umgebenden Verkleidung aus Blech oder Kunststoff bestehen, die nach vorne spitz zuläuft.

## Claims

1. A chassis for special-purpose vehicles, having a front axle and another vehicle axle and vertically-adjustable wheel suspensions (1, 2, 3, 4) which are provided with vertical adjusting units (12, 13), remote-controllable by the driver, to change the ground clearance (9) and with horizontal adjusting units (23, 24), remotely controllable by the driver, to change the track width (10) during travel, wherein hydraulic cylinders (12, 13, 25, 26) are provided as actuators for the adjusting units, **characterised in that** the chassis has a frame, wherein on the frame there is provided a pendulum-mounted front axle (18) which is connected to the frame via a centrally arranged pivoting bearing (19) and which is provided with a stabilizer bar (20) and the additional vehicle axle is arranged on the frame, wherein the front axle and the additional vehicle axle in each case have the horizontal adjusting units (23, 24) and the vertical adjusting units (12, 13) and furthermore are formed from guide profiles (27, 28, 29, 30), displaceable in one another, to absorb the weight forces, wherein the guide profiles (27, 28, 29, 30) substantially absorb forces transverse to the adjustment direction (31) and the horizontal adjusting units (23, 24) are substantially subject to forces in the adjustment direction (31).

2. A chassis for special-purpose vehicles according to claim 1, **characterised in that** a pneumatic suspension (17) is provided between the front axle and the rear axle and the frame, which pneumatic suspension has a load regulator which maintains the ground clearance (9) constant with variable load weight.

3. A chassis for special-purpose vehicles according to claim 1 or 2, **characterised in that** the vertical adjusting units (12, 13) are in each case in the form of two vertically orientated hydraulic cylinders arranged one behind the other in the travel direction (14).

4. A chassis for special-purpose vehicles according to claim 1, 2 or 3, **characterised in that** the wheels (5, 6, 7, 8) of a powered axle are in each case provided with an hydraulic wheel-hub motor (15) and **in that** preferably two powered axles with four wheels (5, 6, 7, 8) are provided.

5. A chassis for special-purpose vehicles according to any one of claims 1 to 4, **characterised in that** for steering of the front wheels (5, 6), the front axle (18) is provided with a track rod (21) having an hydraulic cylinder (22) which serves to longitudinally adjust the track rod (21) synchronously to the adjustment of the track width (10) of the front wheels (5, 6).

6. A chassis for special-purpose vehicles according to any one of the preceding claims, **characterised in that** the wheel suspensions (1, 2, 3, 4) are provided with a mechanical locking device for the track width (10), preferably in the form of an eccentric locking device.

7. A chassis for special-purpose vehicles according to any one of the preceding claims, **characterised in that** a block is provided and prevents an alteration of the track width (10) when the wheels (5, 6, 7, 8) are at a standstill, preferably in the form of a software-wise or hardware-wise electronic block in a control device for controlling the horizontal adjusting units (23, 24).

8. A chassis for special-purpose vehicles according to any one of the preceding claims, **characterised in that** a drive control device has a speed limiter which in the event of greater ground clearance (9) than a predetermined threshold value limits the travel speed of the chassis to a predetermined value, preferably **in that** in the event of greater ground clearance (9) than 1.3 m, the travel speed is limited electronically to maximum 15 km/h.

9. A chassis for special-purpose vehicles according to any one of the preceding claims, **characterised in that** the wheels (5, 6, 7, 8) are provided with plant deflectors which consist of a sheet-metal or plastics sheathing surrounding the front side of the wheels (5, 6, 7, 8) and tapering forwards.

## Revendications

1. Châssis pour véhicules spéciaux, avec un essieu avant et un autre essieu de véhicule et des suspensions de roues (1, 2, 3, 4) réglables en hauteur qui sont munies d'unités de réglage vertical (12, 13) pouvant être télécommandées par le conducteur pour modifier la hauteur par rapport au sol (9) et d'unités de réglage horizontal (23, 24) pouvant être télécommandées par le conducteur pour modifier l'écartement des roues (10) durant la conduite, des cylindres hydrauliques (12, 13, 25, 26) étant utilisés comme moteurs de positionnement pour les unités de réglage, **caractérisé en ce que** le châssis présente un cadre sur lequel est prévu un essieu avant (18) logé oscillant, lequel essieu avant est relié au cadre par un palier pivotant (19) disposé au centre et est muni d'un stabilisateur transversal (20), et l'autre essieu du véhicule est disposé sur le cadre, l'essieu avant et l'autre essieu du véhicule étant munis chacun d'unités de réglage horizontal (23, 24) et d'unités de réglage vertical (12, 13), et sont en outre formés de profilés de guidage (27 ,28, 29, 30) pouvant être déplacés les uns dans les autres afin d'absorber les forces de poids, les profilés de guidage (27, 28, 29, 30) absorbant essentiellement des forces transversales à la direction de réglage (31) et les unités de réglage horizontal (23, 24) étant soumises essentiellement à des forces dans la direction de réglage (31).

2. Châssis pour véhicules spéciaux selon la revendication 1, **caractérisé en ce qu'**il est prévu entre l'essieu avant et l'essieu arrière et le cadre un amortisseur pneumatique (17) qui est muni d'un contrôleur de charge lequel maintient la hauteur par rapport au sol (9) constante en cas de poids de charges variables.

3. Châssis pour véhicules spéciaux selon la revendication 1 ou 2, **caractérisé en ce que** les unités de réglage vertical (12, 13) sont constituées chacune de deux cylindres hydrauliques placés l'un derrière l'autre dans la direction d'avancement (14) et orientés verticalement.

4. Châssis pour véhicules spéciaux selon la revendication 1, 2 ou 3, **caractérisé en ce que** les roues (5, 6, 7, 8) d'un essieu moteur sont chacune munies d'un moteur sur moyeu de roue (15) hydraulique, et **en ce qu'**il est prévu de préférence deux essieux moteurs avec quatre roues (5, 6, 7, 8).

5. Châssis pour véhicules spéciaux selon l'une des revendications 1 à 4, **caractérisé en ce que** pour diriger les roues avant (5, 6), l'essieu avant (18) est muni d'une barre d'accouplement (21) qui comporte un cylindre hydraulique (22) servant au réglage en longueur de la barre d'accouplement (21) de façon synchrone avec le réglage de l'écartement des roues (10) des roues avant (5, 6).

6. Châssis pour véhicules spéciaux selon l'une des revendications précédentes, **caractérisé en ce que** les suspensions de roue (1, 2, 3, 4) sont munies d'un dispositif d'arrêt mécanique pour l'écartement des roues (10), de préférence sous la forme d'un dispositif d'arrêt excentrique.

7. Châssis pour véhicules spéciaux selon l'une des revendications précédentes, **caractérisé en ce qu'**un dispositif de verrouillage est prévu qui empêche une modification de l'écartement des roues (10) lorsque les roues (5, 6, 7, 8) sont à l'arrêt, de préférence sous la forme d'un dispositif de verrouillage électronique de type software ou hardware dans un dispositif de commande pour commander les unités de réglage horizontal (23, 24).

8. Châssis pour véhicules spéciaux selon l'une des revendications précédentes, **caractérisé en ce qu'**un dispositif de commande moteur est muni d'un limiteur de vitesse qui, lorsque la hauteur par rapport au sol (9) est supérieure à une valeur seuil fixée, limite la vitesse d'avancement du châssis à une valeur donnée, de préférence **en ce que** la vitesse d'avancement est limitée électroniquement à maximum 15 km/h lorsque la hauteur par rapport au sol (9) est supérieure à 1,3 m.

9. Châssis pour véhicules spéciaux selon l'une des revendications précédentes, **caractérisé en ce que** les roues (5, 6, 7, 8) sont munies de déflecteurs protège-plants qui sont constitués d'une garniture en tôle ou en plastique entourant la partie avant des roues (5, 6, 7, 8) et qui s'étend en pointe vers l'avant.
